Europäisches Patentamt

(19) European Patent Office

Office européen des brevets

(11) Publication number: **0 093 176**
**B1**

# (12) EUROPEAN PATENT SPECIFICATION

(45) Date of publication of patent specification: **21.01.87**

(51) Int. Cl.⁴: **F 16 D 13/64**

(21) Application number: **82903188.9**

(22) Date of filing: **29.10.82**

(86) International application number:
**PCT/JP82/00424**

(87) International publication number:
**WO 83/01663 11.05.83 Gazette 83/11**

(54) **CLUTCH DISC STRUCTURE.**

(30) Priority: **29.10.81 JP 161631/81 u**
**29.10.81 JP 161632/81 u**
**29.10.81 JP 161633/81 u**

(43) Date of publication of application:
**09.11.83 Bulletin 83/45**

(45) Publication of the grant of the patent:
**21.01.87 Bulletin 87/04**

(84) Designated Contracting States:
**DE FR GB**

(56) References cited:
**FR-A-2 223 595**
**FR-A-2 386 729**
**FR-A-2 503 295**
**GB-A- 512 009**
**GB-A-2 052 683**
**JP-B-45 033 328**
**JP-B-52 040 704**
**JP-B-54 017 110**
**JP-U-52 041 439**

(73) Proprietor: **MITSUBISHI JIDOSHA KOGYO
KABUSHIKI KAISHA**
**33-8, Shiba 5-chome Minato-ku
Tokyo 108 (JP)**

(73) Proprietor: **KABUSHIKI KAISHA DAIKIN
SEISAKUSHO**
**1-1, Kidamotomiya 1-chome
Neyagawa-shi Osaka 572 (JP)**

(72) Inventor: **KAYANOKI, Katsuhiko Mitsubishi
J.K.K.K.K.S.
1, Uzumasatatsumicho Uyo-ku
Kyoto-shi Kyoto 616 (JP)**
Inventor: **TERAMACHI, Kazuo Mitsubishi
J.K.K.K.K.S.
1, Uzumasatatsumicho Uyo-ku
Kyoto-shi Kyoto 616 (JP)**
Inventor: **ONO, Seigo Mitsubishi J.K.K.K.K.S.
1, Uzumasatatsumicho Uyo-ku
Kyoto-shi Kyoto 616 (JP)**
Inventor: **HASHIMOTO, Yasuyuki
17-4, Nanseidai 3-chome
Katano-shi Osaka 576 (JP)**

Courier Press, Leamington Spa, England.

(56) References cited:

JP-U-55 031 075
JP-Y-46 026 487

Köhler/Rögnitz: "Maschinenteile", part 2, 5th
edition 1976, B.G. Teubner, Stuttgart (DE),
pages 53,54

(74) Representative: Orr, William McLean et al
Haseltine Lake & Co Hazlitt House 28
Southampton Buildings Chancery Lane
London WC2A 1AT (GB)

**Description**

This invention relates to a clutch disc structure for an automobile, which is constructed for absorbing torque variations occurring during engine idling.

During transmission of drive power from an engine to a transmission through a clutch apparatus used in an automobile, a rattling meshing noise is generated from the gears of the transmission due to non-uniform rotation of the engine, especially when the engine is idling, that is, when the gears of the transmission are placed in a no-load condition.

Such a phenomenon is attributable to the fact that a variation of transmitted torque is directly transmitted to the transmission because the idling torque, at the time of generation of such rattling meshing noise in the transmission, is very small and the usual torsion spring, which transmits torque between the input and the output of the clutch, acts as a rigid body.

Also, because of the provision of backlash between the gears of the transmission, the gears collide against each other to act as a source of such rattling meshing noise. To deal with such a problem, a transmission type has been proposed in which an auxiliary gear is additionally associated with each of the gears to provide a backlash-less mechanism. However, the proposed transmission type is not commonly presently employed due to its complex structure and expense.

It is known from FR—A—2 386 729 to provide a clutch disc structure having a disc plate carrying a friction disc, a hub, a torque plate mounted on the outer periphery of the hub, a torque spring acting as a buffer and transmitting torque between the disc plate and the torque plate, and a torsion spring also acting as a buffer and transmitting torque between the torque plate and the hub. The disc plate is rivetted to a guide ring which is rotatable on the hub, and a bush is press-fitted between the sliding surfaces of the guide ring and the hub in order to reduce the bearing pressure.

However, in this known construction, the bush is provided at only one axial end of the hub, and its primary purpose is to reduce the bearing load by increasing the sliding area of contact between the guide ring and the hub. The bearing portion of the bush is cylindrical, and is mounted with radial clearance on the hub, so that it does not provide any significant resistance to ingress of dust to the external periphery of the hub via this end of the hub. Furthermore, at the opposite axial end of the hub, there is a further guide ring having substantial radial clearance with the hub, but no bush is provided so that there is easy access to the hub exterior for dust via this opposite end of the hub.

In order to prevent generation of rattling meshing noise from the gears of a transmission, due to slight torque variation during engine idling, it is important to set the hysteresis torque of the clutch disc at a low value in order to absorb the torque variation, thereby preventing premature deterioration of the clutch disc.

The invention has been developed in relation to a clutch disc structure having a low value of hysteresis torque, and seeks to maintain this low value so that it does not deteriorate unduly with age (thereby preventing premature generation of rattling meshing noise during engine idling and causing improved wear resistance and durability). The principle factor which can cause premature ageing of a low hysteresis value of a clutch disc is increased friction along the interface between the hub exterior and the internal sliding surfaces of the members rotatable thereon.

According to the invention there is provided a clutch disc structure including a pair of disc plates carrying friction discs, a hub arranged to transmit torque derived from the disc plates to an output shaft, a torque plate arranged on the outer periphery of the hub, at least one torque spring arranged between said disc plates and said torque plate to act as buffer means acting in the direction of rotation, at least one torsion spring arranged between said torque plate and said hub to act as buffer means acting in the direction of rotation, and a cylindrical bush arranged at one axial end of the hub between the radially inner surface of one of the disc plates and the radially outer surface of the hub, characterised in that the radially inner surface of the bush has a grease groove to promote sliding action between the bush and the hub, and in that a radially inwardly extending flange is provided on the axially outer end of the bush so that the bush prevents ingress of dust via said outer end and along the interface between the bush and the hub.

By providing the grease groove on the radially inner surface of the bush, and by preventing ingress of dust to the hub outer periphery, a low coefficient of friction can be maintained between the sliding surfaces, whereby a given low hysteresis torque can be maintained without causing deterioration with age, thereby preventing the generation of rattling meshing noise during idling for a long period of time, and improving wear resistance and durability.

Brief description of drawings

Fig. 1 is a longitudinal sectional view of a clutch disc structure according to the present invention;

Fig. 2 is a partly cut-away, plan view illustrating principal parts of the clutch disc structure;

Fig. 3 is a sectional view of a part of a bush of the structure shown in Fig. 1;

Fig. 4(a) is a front elevation view of a hub plate of the structure shown in Fig. 1; and

Fig. 4(b) is a sectional view taken along the line Z—Z in Fig. 4(a).

Preferred embodiment of the present invention will now be described in detail with reference to the accompanying drawings.

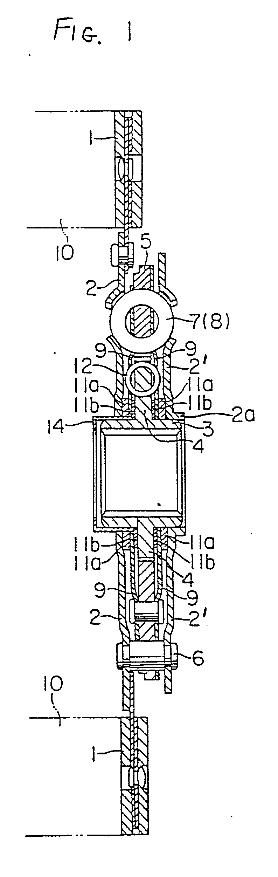

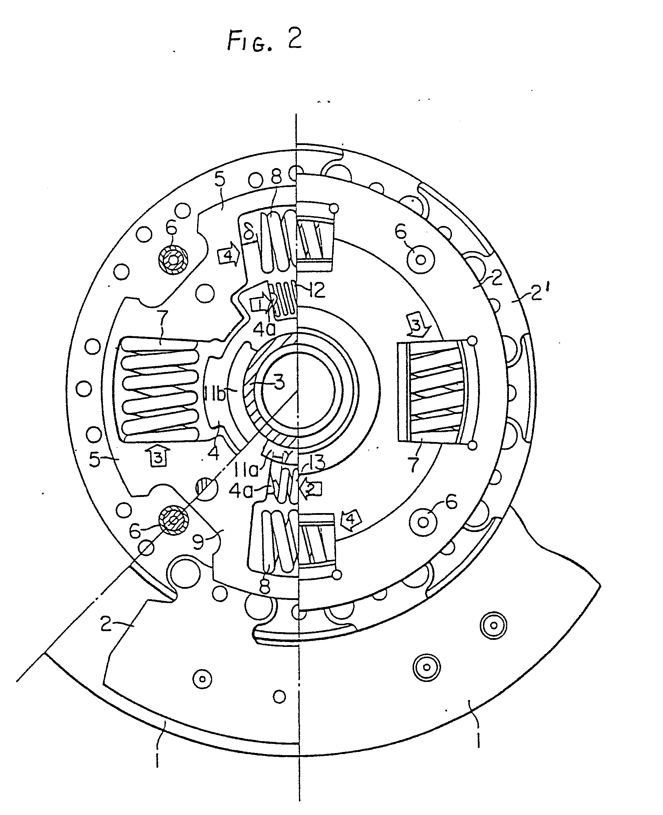

Fig. 1 to Fig. 4 show the structure of the clutch disc according to the present invention. Referring to the figures, 1 designates friction discs; 2 and 2′ designates disc plates fixed to the friction discs 1;

3 designates a hub splined to an output shaft connected to a transmission (not shown); 4 designates a hub plate having four projections extending radially from the hub 3; 5 designates a torque plate disposed on the outer periphery of the hub plate 4 to transmit torque from the disc plates 2, 2' to the hub 3 through the hub plate 4; 6 designates stop pins fixing the ends of the disc plates 2, 2' and inserted in grooves formed in the torque plate 5; and 7 and 8 designate a pair of torque springs and a pair of sub-torque springs respectively disposed between the disc plates 2, 2' and the torque plate 5. A play having a clearance δ is provided between the sub-torque springs 8 and the torque plate 5.

9 designates friction plates disposed between the disc plates 2, 2' and the hub plate 4, and 10 designates a flywheel connected to a drive shaft (not shown) of an engine.

Further, 11a and 11b designate pairs of friction members respectively. The members 11a are disposed between the disc plates 2, 2' and the friction plates 9 and are made of a material having a high coefficient of friction, and the members 11b are disposed between the friction plates 9 and the hub plate 4 and are made of a material having a low coefficient of friction, so as to control the fine adjustment of torque variation when the clutch is engaged.

Further, 12 and 13 designate a torsion spring disposed between the friction plates 9 and the hub plate 4 and a sub-torsion spring disposed between the friction plates 9 and the hub plate 4, with a play having a clearance τ, respectively. The torque transmission from the engine is arranged to be transmitted along the system shown in Fig. 1.

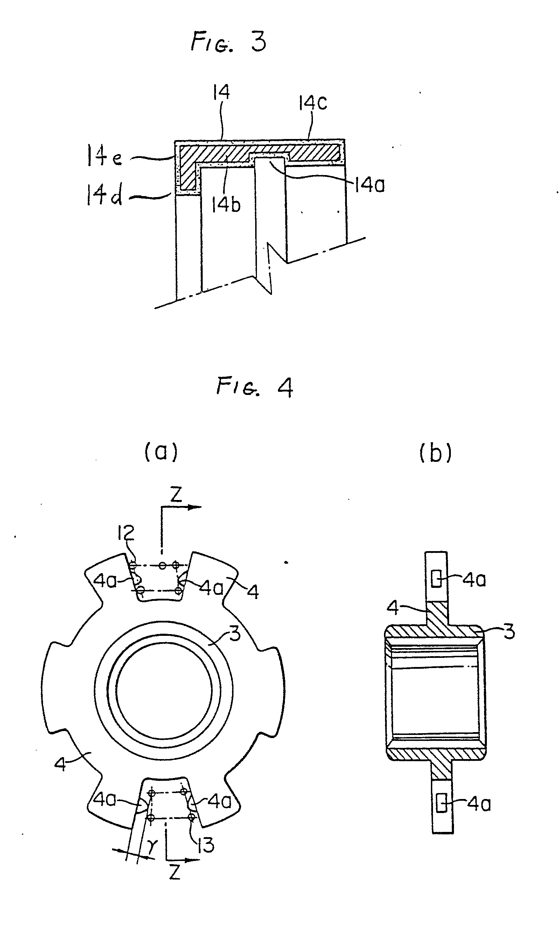

Furthermore, a bush 14 is press-fitted between the sliding surface of the disc plate 2 and the hub 3 to be located on at least one side of such surfaces for reducing the surface pressure, and for resisting ingress of dust to the hub exterior surface. As shown in Fig. 3, the bush 14 is formed at its inner peripheral portion with a grease groove 14a for reducing friction with the hub 3. Also, at the axially outer end 14e of the bush, there is provided a radially inwardly extending flange 14d which shields the axially outer end of the hub 3.

Further, as shown in Fig. 1, an integral annular flange 2a is formed on the side of the disc plate 2' remote from the side where the bush 14 is press-fitted, for reducing the surface pressure between the disc plate 2' and the hub 3 and also for preventing intrusion of dust from the exterior.

The structure may be such that the bush 14 is press-fitted on both sides of the disc plates (2, 2').

On the other hand, in order to decrease the coefficient of friction between the disc plates 2, 2' and the hub 3 and hub plate 4, thereby limiting an increase in the hysteresis torque in the clutch disc, predetermined plate coatings are provided on the hub 3, friction members 11a, 11b and bush 14 for improving the resistance to wear.

More precisely, an electroless plated Ni coating is provided on the hub 3. It is preferable that the thickness is about 3—11 μ, and the plated coating hardness is about Hmv 600—1,000. On the other hand, as shown in Fig. 3, a plated teflon-nickel composite coating 14c having a thickness of about 10—16 μ and a plated coating hardness of about Hmv 450—550 is provided on the Fe base 14b of the bush 14. The friction member 11a and 11b are also similarly plated with a composite coating of teflon-nickel.

The plated composite coating has a low coefficient of friction depending on the content of teflon, and wear is remarkably little when it is combined with the members above described. Most excellent results from the aspect of maintenance of the low coefficient of friction were obtained when the content of teflon was selected to be 9±2% (per volume) with the remainder being Ni and the grain size of teflon was selected to be 0.3—1 μ.

Further, in the area holding the torsion spring 12 disposed between the friction plates 9 and the hub plate 4 and in the area similarly holding the sub-torsion spring 13 therebetween with the clearance τ, spring-retaining lugs 4a are formed integrally with the spring holding portions of the hub plate 4 as shown in Figs. 4(a), 4(b) so that both ends of these springs may not be lodged or displaced toward the friction plates 9.

The system of torque transmission through the clutch disc, having a structure as described above, will now be explained. Especially, when the engine is in its idling condition, the torque is transmitted to the transmission from the region indicated by "arrow 1" toward the region "arrow 4" in a manner as shown in Fig. 1. The torque transmission in the individual regions will now be explained.

First, in the region "arrow 1" in the idling stage, the torque from the engine is transmitted to the torque springs 7 through the friction discs 1 and disc plates 2, 2' and, without deflecting the torque springs 7, the torque is transmitted to the torsion spring 12 through the torque plate 5 and friction plates 9. Consequently, the torsion spring 12 is not appreciably deflected, and the torque is transmitted through the hub plate 4 to the hub 3 to be transmitted to the transmission.

Then, in the region "arrow 2" in which the clutch is becoming engaged, the torsion spring 12 above described is not deflected beyond the play corresponding to the clearance τ, and the torque is transmitted through the sub-torsion spring 13 to the hub plate 4, thence to the hub 3.

In the operation above described, the friction members 11a and 11b act to ensure smooth operation of the torque springs 7, torsion spring 12 and sub-torsion spring 13.

Then, when the load starts to be imparted as shown at the region "arrow 3", the sub-torsion spring 13 is deflected beyond the clearance τ, and, under the condition in which the torque plate 5 and the hub plate 4 are unitarily coupled together, the torque springs 7 are deflected by the amount corresponding to the clearance of the sub-torque springs 8 to transmit the torque to the hub 3.

Then, when the load is normally imparted as shown at the region "arrow 4", both of the torque springs 7 and the sub-torque springs 8 are deflected so that the torque from the engine is transmitted to the transmission through the hub plate 4 and hub 3.

Since the bush 14 is interposed between the sliding surfaces of the disc plate 2 and the hub 3, the surface pressure is small, and the predetermined plating applied to the individual members having the sliding surfaces improves the resistance to wear.

As described in detail hereinbefore, the clutch disc structure according to the present invention has such a construction that a bush is press-fitted between the sliding surfaces of the hub and the disc plate(s) and thus exhibits very marked practical effects, among others, that the surface pressure at the sliding surfaces can be reduced, and intrusion of dust into the sliding surfaces can be prevented.

Further, in the clutch disc structure according to the present invention, the bush is press-fitted between the sliding surfaces of the hub and the disc plate(s) so as to reduce the surface pressure at the sliding surfaces, and, also, the individual members having the sliding surfaces are plated so as to decrease the coefficient of friction thereby remarkably improving the wear resistance of the individual members providing the sliding surfaces. Therefore, the present invention exhibits very marked practical effects, among others, that the noise and vibration can be reduced.

Further, in the clutch disc structure according to the present invention, a torque plate engageable with the hub plate is disposed on the outer periphery of the hub of the transmission output shaft, and a sub-torsion spring is mounted with play between said hub plate and the torque plate so as to absorb torque variation occurring when the clutch is engaging from the engine idling condition. Therefore, the present invention exhibits such effects, among others, that generation of collision noise between the hub plate and the torque plate can be prevented and, also, generation of rattling meshing noise in the transmission can be prevented.

Further, the torsion spring disposed between the friction plates and the hub plate and the sub-torsion spring similarly disposed therebetween with a clearance are retained in position by being positioned at both their ends by the spring-retaining lugs formed on the spring holding portions of the hub plate, so that these springs may not interfere with the friction plates due to lodging or displacement of the springs attributable to a torque variation, not only during idling, but also during clutch engagement. Therefore, the present invention exhibits very marked practical effects, among others, that generation of hysteresis torque can be suppressed, and generation of noise can also be prevented.

## Claims

1. A clutch disc structure including a pair of disc plates (2, 2') carrying friction discs (1), a hub (3, 4) arranged to transmit torque derived from the disc plates (2, 2') to an output shaft, a torque plate (5) arranged on the outer periphery (4) of the hub, at least one torque spring (7, 8) arranged between said disc plates (2, 2') and said torque plate (5) to act as buffer means acting in the direction of rotation, at least one torsion spring (12, 13) arranged between said torque plate (5) and said hub to act as buffer means acting in the direction of rotation, and a cylindrical bush (14) arranged at one axial end of the hub between the radially inner surface of one of the disc plates (2) and the radially outer surface of the hub (3), characterised in that the radially inner surface of the bush (14) has a grease groove (14a) to promote sliding action between the bush (14) and the hub, and in that a radially inwardly extending flange (14d) is provided on the axially outer end (14e) of the bush so that the bush prevents ingress of dust via said outer end (14e) and along the interface between the bush and the hub.

2. A clutch disc structure according to claim 1, characterised in that said hub (3) is provided with an electroless plated Ni coating, and said bush (14) is provided with a plated teflon-nickel composite coating.

3. A clutch disc structure according to claim 2, characterised in that friction members (11a, 11b) acting between said hub (3, 4) and said disc plates (2, 2') and said torque plate (5) are provided with a plated teflon-nickel composite coating.

4. A clutch disc structure according to any one of claims 1 to 3, characterised in that a further bush (14) is arranged between the other disc plate (2') and the radially outer surface of said hub (3) at the opposite axial end of the hub.

5. A clutch disc structure according to any one of the preceding claims, characterised in that an integrally formed annular flange (2a) is provided on the other disc plate (2') and extends axially therefrom so as to reduce the pressure contact between the disc plate (2') and the hub (3) and to prevent ingress of dust along the hub via the opposite axial end of the hub.

## Patentansprüche

1. Kupplungsscheibe mit zwei Scheibenplatten (2, 2'), welche Reibungsplatten (1) tragen, einer Nabe (3, 4), die so angeordnet ist, daß sie von den Scheibenplatten (2, 2') abgeleitete Verdrehungskraft auf eine Abtriebswelle überträgt, einer am Außenumfang (4) der Nabe angebrachten Drehmomentplatte (5), mindestens einer Drehmomentfeder (7, 8) die zwischen den Scheibenplatten (2, 2') und der Drehmomentplatte (5) angebracht ist, um als Puffereinrichtung in Rotationsrichtung zu dienen, mindestens einer Drehmomentfeder (12, 13), die zwischen der Drehmomentplatte (5) und der Nabe angebracht ist, um als Puffereinrichtung in Rotationsrichtung zu dienen, und einer zylindrischen Büchse (14), die an einem axialen Ende der Nabe zwischen der radialen Innenfläche einer der Scheibenplatten (2) und der radialen Außenfläche der Nabe (3) angeordnet ist, dadurch gekennzeichnet, daß die radiale Innenfläche der Büchse (14) zur Verbesserung der Gleitwirkung zwischen der Büchse (14) und der Nabe eine Schmierrille (14a) aufweist, und daß ein radial einwärts gerichteter Flansch (14d) am axial äußeren Ende (14e) der Büchse angeordnet ist, so daß die Büchse das Eindringen von Staub durch das äußere Ende (14e) und entlang der Grenze zwischen der Büchse und der Nabe verhindert.

2. Kupplungsscheibe nach Anspruch 1, dadurch gekennzeichnet, daß die Nabe (3) mit einem elektrolos plattierten Nickelüberzug versehen ist, und daß die Büchse (14) mit einem plattierten Überzug aus einer Teflon-Nickel-Zusammensetzung versehen ist.

3. Kupplungsscheibe nach Anspruch 2, dadurch gekennzeichnet, daß Reibungskörper (11a, 11b), die zwischen der Nabe (3, 4), den Scheibenplatten (2, 2') und der Drehmomentplatte (5) wirken, mit einem plattierten Überzug aus einer Teflon-Nickel-Zusammensetzung versehen sind.

4. Kupplungsscheibe nach einem der Ansprüche 1 bis 3 dadurch gekennzeichnet, daß eine weitere Büchse (14) zwischen der anderen Scheibenplatte (2') und der radialen Außenfläche der Nabe (3) am gegenüberliegenden axialen Ende der Nabe angeordnet ist.

5. Kupplungsscheibe nach einem der vorhergehenden Ansprüche, dadurch gekennzeichnet, daß auf der anderen Scheibenplatte (2') ein einstückig ausgebildeter Ringflansch (2a) angebracht ist und axial von dieser absteht, um die Druckberührung zwischen der Scheibenplatte (2') und der Nabe (3) zu verringern und um das Eindringen von Staub entlang der Nabe durch das gegenüberliegende axiale Ende der Nabe zu verhindern.

**Revendications**

1. Structure de disque d'embrayage comprenant une paire de plateaux de disque (2, 2') supportant des disques de friction (1), un moyeu (3, 4) arrangé pour transmettre un couple provenant des plateaux de disques (2, 2') à un arbre de sortie, un plateau de couple (5) disposé sur la périphérie extérieure (4) du moyeau, au moins un ressort de couple (7, 8) disposé entre lesdits plateaux de disque (2, 2') et ledit plateau de couple (5) pour servir de moyen de tampon de choc agissant dans la direction de la rotation, au moins un ressort de torsion (12, 13) adapté entre ledit plateau de couple (5) et ledit moyeu pour servir de moyen de tampon de choc agissant dans la direction de la rotation, et une douille cylindrique (14) adaptée à une extrémité axiale du moyeu entre la surface radialement intérieure de l'un des plateaux de disque (2) et la surface radialement extérieure du moyeu (3), caractérisée en ce que la surface radialement intérieure de la douille (14) a une rainure de graisse (14a) pour favoriser l'action de glissement entre la douille (14) et le moyeu, et en ce qu'une bride s'étendant radialement vers l'intérieur (14d) est prévue sur l'extrémité axialement extérieure (14e) de la douille, de façon à ce que la douille empêche l'entrée de poussières par ladite extrémité extérieure (14e), et le long de l'interface entre la douille et le moyeu.

2. Structure de disque d'embrayage selon la revendication 1, caractérisée en ce que ledit moyeu (3) est révêtu d'une couche mince de nickel plaqué appliquée par galvanisation autocatalytique, et que ladite douille (14) est revêtue d'une couche mince composite de téflon-nickel plaqué.

3. Structure de disque d'embrayage selon la revendication 2, caractérisée en ce que les organes de friction (11a, 11b) agissant sur ledit moyeu (3, 4) et lesdits plateaux de disque (2, 2') et ledit plateau de couple (5) sont revêtus d'une couche mince composite de téflon-nickel plaqué.

4. Structure de disque d'embrayage selon l'une ou l'autre des revendications 1 à 3, caractérisée en ce qu'une douille supplémentaire (14) est positionnée entre l'autre plateau de disque (2') et la surface radialement extérieure dudit moyeu (3), à l'extrémité axiale opposée du moyeu.

5. Structure de disque d'embrayage selon l'une ou l'autre des revendications précédentes, caractérisée en ce qu'un collet annulaire (2a) formé dans la masse est prévu sur l'autre plateau de disque (2') et s'étend axialement à partir de lui de façon à réduire le contact de pression entre le plateau de disque (2') et le moyeu (3), et pour empêcher l'entrée de poussières le long du moyeu par l'extrémité axiale opposée du moyeu.

FIG. 1

FIG. 2

Fig. 3

Fig. 4

(a)

(b)